# EUROPÄISCHE PATENTSCHRIFT

(11) **EP 3 867 999 B1**
(45) Veröffentlichungstag und Bekanntmachung des Hinweises auf die Patenterteilung: **21.02.2024**
(21) Anmeldenummer: 19779416.7
(22) Anmeldetag: 24.09.2019
(51) Int. Cl.: H02K 3/30, H01B 3/40, H02K 15/10, H01B 3/18, C08G 59/18, H01F 5/06, C09D 163/00

(54) **SPULE SOWIE STROMERREGTE SYNCHRONMASCHINE**
COIL AND CURRENT EXCITED SYNCHRONOUS MACHINE
BOBINE AINSI QUE MACHINE SYNCHRONE EXCITÉE PAR UN COURANT

(30) Priorität: 16.10.2018 DE 102018125567
(43) Veröffentlichungstag der Anmeldung: 25.08.2021
(73) Patentinhaber: Bayerische Motoren Werke Aktiengesellschaft, 80809 München (DE)
(72) Erfinder: FLEISCHER, Gerd, 86931 Prittriching (DE); SEYIS, Sefa, 84048 Mainburg (DE); BECK, Florian, 85354 Freising (DE); LOOS, Daniel, 80639 München (DE); KLONINGER, Christian, 82407 Wielenbach (DE); BECKER, Thomas, 84405 Dorfen (DE); RISCH, Florian, 90559 Burgthann (DE)
(86) Internationale Anmeldenummer: PCT/EP2019/075588
(87) Internationale Veröffentlichungsnummer: WO 2020/078668

(56) Entgegenhaltungen:
- WO-A1-2007/036505
- CH-A- 416 591
- JP-A- 2007 200 986
- US-B2- 9 224 523
- REFEREX, 31. Dezember 2001 (2001-12-31), XP040425187,

## Beschreibung

Die vorliegende Erfindung betrifft eine Spule, insbesondere einen Rotor oder Stator einer elektrischen Maschine, sowie eine stromerregte Synchronmaschine.

Es ist aus dem Stand der Technik bekannt, Spulen, wie Statoren oder Rotoren von elektrischen Maschinen, in eine Vergussmasse einzubetten, insbesondere, zumindest bereichsweise, zu umspritzen. Damit kann die Festigkeit oder Stabilität der gesamten Anordnung gesteigert sowie der Wärmehaushalt beeinflusst werden etc. Dabei ist die Haftung der Vergussmasse oftmals problematisch. Bedingt durch die unterschiedlichen Wärmeausdehnungskoeffizienten der verschiedenen Werkstoffe, die hohen Betriebstemperaturen sowie die, insbesondere bei Rotoren, hohen wirkenden Kräfte, kann es beispielsweise zu Ablösungen bzw. allgemein zu Schäden am Verguss kommen. Die WO 2007/036505 A1 offenbart in diesem Zusammenhang eine rotierende elektrische Maschine mit einem mit Wicklungen versehenen Stator, wobei ein Wickelkopf des Stators mit einem Gießharzkörper umgeben ist, und wobei zwischen dem Gießharzkörper und einem Tragkörper des Stators, wie beispielsweise einem Blechpaket, eine Schicht aus einem flexiblen, wärmeleitfähigen Material vorgesehen ist, welche die Haftung des Gießharzkörpers verbessern soll. Das Vorsehen einer derartigen zusätzlichen Schicht ist produktionstechnisch gesehen allerdings aufwändig und verteuert die Herstellungskosten.

Die JP 2007200986 A betrifft unter anderem eine elektromagnetische Spule. Um die Temperaturbeständigkeit der Isolation der Spule zu erhöhen sowie um eine gleichmäßige Isolation zu ermöglichen, wird zur Isolation ein Material vorgeschlagen, welches mittels eines Sol-Gel-Prozesses hergestellt wird.

Die CH 416591 A betrifft epoxydierte Ester, Verfahren zu ihrer Herstellung sowie die Verwendung solcher Ester, beispielsweise als Isolierstoffe für die Elektroindustrie.

Das Fachbuch "Mechanics and Analysis of Composite Materials" (Valery V. Vasiliev und Evgeny V. Morozow), ISBN 0-08-042702-2, first edition 2001) behandelt umfassend Eigenschaften von Verbundwerkstoffen.

Die US 9 224 523 B2 betrifft einen wandlerüberspannungssicheren isolierten Draht mit mindestens einer gebrannten Emailschicht um den äußeren Umfang eines Leiters und einer umspritzten Harzschicht auf der Außenseite der gebrannten Emailschicht.

Die WO 2007/036505 A1 betrifft rotierende elektrische Maschinen mit einem mit Wicklungen versehenen Stator, dem ein Tragkörper und/oder ein Feststoffkörper aus Metall zugeordnet sind, wobei mindestens einem Wickelkopf der Statorwicklungen eine Wärmebrücke zugeordnet ist, welche einen wärmeleitfähigen, den Wickelkopf einbettenden, Gießharzkörper umfasst, wobei diejenigen Oberflächen des Tragkörpers und/oder des Festkörpers aus Metall, welche dem Gießharzkörper zugewandt sind, mit diesem zumindest teilweise durch eine Schicht aus einem flexiblen, wärmeleitfähigen Material verbunden sind.

Es ist daher eine Aufgabe der vorliegenden Erfindung, eine Spule sowie eine stromerregte Synchronmaschine anzugeben, welche ein optimales Betriebsverhalten sowie höchste Ausfallsicherheit bei gleichzeitig geringen Herstellungs- bzw. Produktionskosten vereinen.

Diese Aufgabe wird durch eine Spule gemäß Anspruch 1 sowie durch eine stromerregte Synchronmaschine gemäß Anspruch 11 gelöst. Weitere Vorteile und Merkmale ergeben sich aus den Unteransprüchen sowie der Beschreibung.

Erfindungsgemäß umfasst eine Spule eine Wicklung, welche zumindest bereichsweise mit einem Epoxidharz umgeben, insbesondere umspritzt, ist, wobei ein Verhältnis einer Druckfestigkeit des Epoxidharzes zu dessen Zugfestigkeit bei Raumtemperatur zwischen 2 und 5 liegt, wobei der Elastizitätsmodul bei Raumtemperatur bei zumindest 5000 MPa liegt, und wobei der Elastizitätsmodul sowie die Zugfestigkeit bei einer Glasübergangstemperatur des Epoxidharzes Werte annehmen, welche bei zumindest 30 % der Werte bei Raumtemperatur liegen. Die Druckfestigkeit wird also mit Vorteil deutlich höher als die Zugfestigkeit eingestellt bzw. gewählt.

Gemäß einer bevorzugten Ausführungsform ist die Spule ein Rotor einer elektrischen Maschine, insbesondere einer stromerregten Synchronmaschine, welche z. B. als Traktionsmotor im Kraftfahrzeugbereich verwendet wird. Dabei hat sich überraschend herausgestellt, dass das oben genannte Verhältnis einen idealen Kompromiss darstellt, da ein derartiges Epoxidharz, insbesondere auch in Kombination mit dem Elastizitätsmodul von zumindest 5000 MPa, ausgezeichnete Festigkeiten bei gleichzeitig genügend hoher Flexibilität bereitstellt. Ein derartiger Rotor kann Drehzahlen von 17000 Umdrehungen pro Minute und mehr erreichen. Dadurch dass der Elastizitätsmodul sowie die Zugfestigkeit bei der Glasübergangstemperatur des Epoxidharzes Werte annehmen, welche bei zumindest 30 % der Werte bei Raumtemperatur liegen, werden auch ausreichende Sicherheitsreserven in den hohen und höchsten Lastbereichen sichergestellt.

Gemäß einer bevorzugten Ausführungsform liegt die Glasübergangstemperatur bei zumindest 150° C, insbesondere bevorzugt bei zumindest 180° C.

Der E-Modul liegt bei Raumtemperatur gemäß einer bevorzugten Ausführungsform bei zumindest 7000 oder 8000 MPa, besonders bevorzugt in einem Bereich von 10000 MPa bzw. bei zumindest 10000 MPa. Die Zugfestigkeit liegt bevorzugt bei zumindest 75 MPa und die Druckfestigkeit bei zumindest 200 MPa. Auch die Druckfestigkeit nimmt bevorzugt bei der Glasübergangstemperatur Werte an, welche bei zumindest 30 % der Werte bei Raumtemperatur liegen. Mit Vorteil liegt das vorgenannte Verhältnis auch zwischen 2,5 und 4,5 bzw. 3 und 4.

Gemäß einer bevorzugten Ausführungsform liegt der lineare Wärmeausdehnungskoeffizient des Epoxidharzes zwischen dem von Kupfer und Aluminium oder Stahl. Damit können vorteilhafterweise Spannungen im Betrieb verringert werden.

Insbesondere liegt der lineare Wärmeausdehnungskoeffizient zwischen 10 und 23 ppm/K, insbesondere bevorzugt zwischen 10 und 30 ppm/K.

Gemäß einer Ausführungsform liegt die Druckfestigkeit bei Raumtemperatur zumindest bei 150 MPa, insbesondere bevorzugt bei zumindest 200 MPa.

Bevorzugt liegt die Zugfestigkeit bei Raumtemperatur zumindest bei 60 MPa, bevorzugt bei zumindest 75 MPa.

Wie bereits erwähnt, liegt der Elastizitätsmodul bei Raumtemperatur gemäß einer bevorzugten Ausführungsform zumindest bei 10000 MPa.

Bevorzugt liegt die spezifische Bruchenergie zumindest bei 200 J/m², bevorzugt bei zumindest 500 J/m².

Die Wärmeleitfähigkeit ist bevorzugt größer als 0,5 W/(mK), bevorzugt größer als 0,7 W/(mK), ermittelt über die Laser Flash Analyse.

Zweckmäßigerweise handelt es sich bei dem Epoxidharz um ein cycloaliphatisches Epoxidharz, ein Novolak-Epoxidharz oder ein Ein-Komponenten-Epoxidharz mit einem thermisch aktivierbaren latenten Härter.

Eine Anfangsviskosität bei 60° C liegt bevorzugt zwischen 10000 und 20000 mPas. Eine Anfangsviskosität bei 90° C liegt bevorzugt zwischen 3000 und 10000 mPas. Zweckmäßigerweise werden Gelierzeiten bei 120° C von weniger als 20 Minuten erreicht.

Der spezifische Durchgangswiderstand bei 25° C liegt bevorzugt bei 10¹⁴ Ohm*cm, wobei die elektrische Durchschlagfestigkeit bevorzugt zwischen ca. 20 und 30 kV/mm liegt.

Bevorzugt sind etwaige Füllstoffe in dem Epoxidharz nicht elektrisch leitend, nicht magnetisierbar und nicht abrasiv.

Die Erfindung betrifft auch eine stromerregte Synchronmaschine, umfassend eine als Rotor ausgebildete erfindungsgemäße Spule.

Die Glasübergangstemperatur wird nach DIN 51007 / ISO6721/94 bestimmt. Der E-Modul sowie die Zugfestigkeit werden nach ISO 527 bestimmt. Die Druckfestigkeit wird nach ISO 604 bestimmt (Prüfung an einem Würfel mit folgenden Maßen: 5x5x5 mm)). Der lineare Wärmeausdehnungskoeffizient wird nach DIN 51045 bestimmt. Die spezifische Bruchenergie wird nach ISO 178 bestimmt. Der spezifische Durchgangswiderstand wird nach IEC 60093 bestimmt. Die elektrische Durchschlagfestigkeit wird nach IEC 60243-1 bestimmt.

## Patentansprüche

1. Spule,
umfassend eine Wicklung, welche zumindest bereichsweise mit einem Epoxidharz umgeben ist,
wobei ein Verhältnis einer Druckfestigkeit des Epoxidharzes zu dessen Zugfestigkeit bei Raumtemperatur zwischen 2 und 5 liegt,
wobei der Elastizitätsmodul des Epoxidharzes bei Raumtemperatur bei zumindest 5000 MPa liegt, und
wobei der Elastizitätsmodul sowie die Zugfestigkeit bei einer Glasübergangstemperatur des Epoxidharzes Werte annehmen, welche bei zumindest 30 % der Werte bei Raumtemperatur liegen.

2. Spule nach Anspruch 1,
wobei die Spule ein Rotor einer elektrischen Maschine ist.

3. Spule nach Anspruch 1 oder 2,
wobei die Glasübergangstemperatur bei zumindest 150 °C, bevorzugt bei zumindest 180 °C liegt.

4. Spule nach einem der vorhergehenden Ansprüche,
wobei der lineare Wärmeausdehnungskoeffizient des Epoxidharzes zwischen 10 und 23 ppm/K liegt, bevorzugt zwischen 10 und 30 ppm/K.

5. Spule nach einem der vorhergehenden Ansprüche,
wobei die Druckfestigkeit bei Raumtemperatur zumindest 150 MPa beträgt, bevorzugt zumindest 200 MPa.

6. Spule nach einem der vorhergehenden Ansprüche,
wobei die Zugfestigkeit bei Raumtemperatur zumindest 60 MPa beträgt, bevorzugt zumindest 75 MPa.

7. Spule nach einem der vorhergehenden Ansprüche,
wobei der Elastizitätsmodul bei Raumtemperatur zumindest 7000 MPa beträgt.

8. Spule nach einem der vorhergehenden Ansprüche,
wobei die spezifische Bruchenergie des Epoxidharzes zumindest 200 J/m² beträgt, bevorzugt zumindest 500 J/m².

9. Spule nach einem der vorhergehenden Ansprüche,
wobei die Wärmeleitfähigkeit des Epoxidharzes größer als 0,5 W/mK ist.

10. Spule nach einem der vorhergehenden Ansprüche,
wobei das Epoxidharz ein cycloaliphatisches Epoxidharz, ein Novolak-Epoxidharz oder ein Einkomponenten-Epoxidharz mit einem thermisch aktivierbaren latenten Härter ist.

11. Stromerregte Synchronmaschine, umfassend eine als Rotor ausgebildete Spule nach einem der vorhergehenden Ansprüche.

## Claims

1. Coil,
comprising a winding, surrounded at least in some regions by an epoxy resin,
where a ratio of a compressive strength of the epoxy resin to the tensile strength thereof at room temperature is between 2 and 5,
where the modulus of elasticity of the epoxy resin at room temperature is at least 5000 MPa, and
where, at a glass transition temperature of the epoxy resin, the modulus of elasticity and the tensile strength assume values which are at least 30% of the values at room temperature.

2. Coil according to Claim 1,
where the coil is a rotor of an electrical machine.

3. Coil according to Claim 1 or 2,
where the glass transition temperature is at least 150°C, preferably at least 180°C.

4. Coil according to any of the preceding claims,
where the coefficient of linear thermal expansion of the epoxy resin is between 10 and 23 ppm/K, preferably between 10 and 30 ppm/K.

5. Coil according to any of the preceding claims,
where the compressive strength at room temperature is at least 150 MPa, preferably at least 200 MPa.

6. Coil according to any of the preceding claims,
where the tensile strength at room temperature is at least 60 MPa, preferably at least 75 MPa.

7. Coil according to any of the preceding claims,
where the modulus of elasticity at room temperature is at least 7000 MPa.

8. Coil according to any of the preceding claims,
where the specific fracture energy of the epoxy resin is at least 200 J/m², preferably at least 500 J/m².

9. Coil according to any of the preceding claims,
where the thermal conductivity of the epoxy resin is greater than 0.5 W/mK.

10. Coil according to any of the preceding claims,
where the epoxy resin is a cycloaliphatic epoxy resin, a novolak epoxy resin or a single-component epoxy resin with a thermally activatable latent hardener.

11. Current-excited synchronous machine, comprising a coil according to any of the preceding claims configured as rotor.

## Revendications

1. Bobine,
comprenant un enroulement qui au moins par zones est entouré d'une résine époxyde,
le rapport entre la résistance à la compression de la résine époxyde et la résistance à la traction à la température ambiante étant de 2 à 5,
le module d'élasticité de la résine époxyde à la température ambiante étant d'au moins 5 000 MPa, et
le module d'élasticité, ainsi que la résistance à la traction, prenant à la température de transition vitreuse de la résine époxyde des valeurs qui sont d'au moins 30 % des valeurs à la température ambiante.

2. Bobine selon la revendication 1,
la bobine étant un rotor ou une machine électrique.

3. Bobine selon la revendication 1 ou 2,
la température de transition vitreuse étant d'au moins 150 °C, de préférence d'au moins 180 °C.

4. Bobine selon l'une des revendications précédentes,
le coefficient de dilatation thermique linéaire de la résine époxyde étant compris entre 10 et 23 ppm/K, de préférence entre 10 et 30 ppm/K.

5. Bobine selon l'une des revendications précédentes, la résistance à la compression à la température ambiante étant d'au moins 150 MPa, de préférence d'au moins 200 MPa.

6. Bobine selon l'une des revendications précédentes,
la résistance à la traction à la température ambiante étant d'au moins 60 MPa, de préférence d'au moins 75 MPa.

7. Bobine selon l'une des revendications précédentes,
le module d'élasticité à la température ambiante étant d'au moins 7 000 MPa.

8. Bobine selon l'une des revendications précédentes,
l'énergie spécifique de rupture de la résine époxyde étant d'au moins 200 J/m², de préférence d'au moins 500 J/m².

9. Bobine selon l'une des revendications précédentes,
la conductivité thermique de la résine époxyde étant supérieure à 0,5 W/mK.

10. Bobine selon l'une des revendications précédentes,
la résine époxyde étant une résine époxyde cycloaliphatique, une résine époxyde de novolaque ou une résine époxyde monocomposant, avec un durcisseur latent thermiquement activable.

11. Machine synchrone excitée par un courant, comprenant une bobine réalisée comme rotor selon l'une des revendications précédentes.
